# EUROPÄISCHE PATENTSCHRIFT

(11) **EP 2 316 223 B1**
(45) Veröffentlichungstag und Bekanntmachung des Hinweises auf die Patenterteilung: **11.09.2013**
(21) Anmeldenummer: 09777507.6
(22) Anmeldetag: 29.07.2009
(51) Int. Cl.: H04N 21/442, H04N 21/462

(54) **VERFAHREN ZUM GEWINNEN VON BILDERN BEI MEHRFACHEMPFANG**
METHOD FOR OBTAINING IMAGES DURING MULTIPLE RECEPTIONS
PROCÉDÉ D'ACQUISITION D'IMAGES LORS D'UNE RÉCEPTION MULTIPLE

(30) Priorität: 21.08.2008 DE 102008039051
(43) Veröffentlichungstag der Anmeldung: 04.05.2011
(73) Patentinhaber: Audi AG, 85045 Ingolstadt (DE); Friedrich-Alexander-Universität Erlangen-Nürnberg, 91054 Erlangen (DE)
(72) Erfinder: SCHMITT, Andreas, 92342 Freystadt 50 (DE); HEIER, Henning, 85117 Eitensheim (DE); TRÖGER, Tobias, 91054 Erlangen-Buckenhof (DE); KAUP, André, 91090 Effeltrich (DE)
(74) Vertreter: Brandt, Kai
(86) Internationale Anmeldenummer: PCT/EP2009/005479
(87) Internationale Veröffentlichungsnummer: WO 2010/020336

(56) Entgegenhaltungen:
- EP-A- 1 748 655
- WO-A-2005/076623
- WO-A-2008/088305
- DE-A1-102004 020 503
- US-A1- 2005 271 302
- LOWE D G: "Distinctive image features from scale-invariant keypoints", INTERNATIONAL JOURNAL OF COMPUTER VISION, DORDRECHT, NL, vol. 60, no. 2, 1 January 2004 (2004-01-01), pages 91-110, XP002377339,
- G. K. ROHDE ET AL: 'Measuring image similarity to sub-pixel accuracy' BIOMEDICAL IMAGING: NANO TO MACRO, 2006. 3RD IEEE INTERNATIONAL SYMPOSIUM ON, [Online] 09 April 2006, Seiten 638 - 641, XP055052459 Gefunden im Internet: <URL:http://ieeexplore.ieee.org/xpls/abs_al l.jsp?arnumber=1624997&tag=1> [gefunden am 2013-02-06]

## Beschreibung

Die Erfindung betrifft ein Verfahren zum Gewinnen von Bildern eines Fernsehsignals, wobei die Bilder über unterschiedliche Signalwege in codierter Form mehrfach empfangen werden. Der mehrfache Empfang eines Fernsehsignals über unterschiedliche Empfangseinheiten wird auch Mehrfachempfang genannt. Zu der Erfindung gehört auch eine Fernsehempfangseinheit, insbesondere für ein Kraftfahrzeug, die zur Umsetzung des Verfahrens, also zum Mehrfachempfang und Verarbeiten der empfangenen Bilder ausgebildet ist.

Ein Verfahren zum Mehrfachempfang ist bereits aus der Druckschrift DE 100 27 610 A1 bekannt. Dabei wird über zwei Antennen ein digitales Fernsehsignal nach dem Standard "Digital Video Broadcasting - Terrestrial" (DVB-T) empfangen und aus Datenpaketen, die in den beiden den Antennen nachgeschalteten Empfangszweigen aus dem Fernsehsignal gewonnen werden, ein einziger Strom von Datenpaketen erzeugt. Dazu wird im Verlauf einer Kanal-Decodierung der empfangenen Signale aus den beiden Empfangszweigen eine Auswahl von fehlerfrei empfangenen Datenpaketen getroffen oder es werden Datenpakete aus einem Empfangszweig mit entsprechenden Datenpaketen aus dem anderen Empfangszweig verrechnet. Durch die Kombination der Datenpakete aus den beiden Empfangszweigen wird erreicht, dass Störungen in Datenpaketen, die über einen Empfangszweig empfangen wurden, durch Hinzunahme von Datenpaketen des anderen Empfangszweigs ausgeglichen werden können. Die Information darüber, ob ein Datenpaket gestört ist, kann bei einem DVB-T-Signal auf der Ebene der Kanal-Decodierung entweder als kontinuierlicher, die Qualität des empfangenen Signals widerspiegelnder Wert, eine sogenannte Soft-Decision-Information, oder als zweiwertiges Signal, das einen fehlerfreien bzw. einen fehlerhaften Empfang eines Datenpakets signalisiert, abgegriffen werden. Da die zwei unterschiedlich aufgestellten Antennen dasselbe Signal empfangen, ist sichergestellt, dass die Datenpakete beider Empfangszweige nach einem identischen Standard codiert sind und somit miteinander kombiniert werden können. Der kombinierte Paketstrom stellt weiterhin ein gültiges DVB-T-Signal dar. Die durch das Verfahren gemäß der DE 190 27 610 A1 erzielbare Steigerung der Robustheit gegenüber Störungen in den Fernsehsignalen hängt davon ab, wie unterschiedlich die Störungen in den Signalpaketen der beiden Empfangszweige ausfallen. Um ausreichend unterschiedliche Empfangsbedingungen zu erhalten, müssen die Antennen daher an möglichst unterschiedlichen Orten aufgestellt werden.

In einem Verfahren gemäß der Druckschrift DE 602 21 297 T2 wird bereits auf der Seite des Senders dafür gesorgt, dass sich die Störungen in Datenpaketen zweier Empfangszweige eines Empfängers nach Möglichkeit unterscheiden. Dazu wird durch den Sender ein kanal-codiertes Signal mit zwei unterschiedlichen Verfahren auf Trägersignale aufmoduliert. Werden nun auf Seiten des Empfängers die beiden unterschiedlich modulierten Signale durch die beiden Empfangszweige demoduliert, besteht eine hohe Wahrscheinlichkeit, dass sich die bei der Kanal-Decodierung in den beiden Empfangszweigen auftretenden Fehlermuster genügend voneinander unterscheiden, um aus den beiden Paketströmen einen einzigen Paketstrom mit weniger Störungen erzeugen zu können.

In der Druckschrift WO 03/103280 A1 wird ein Verfahren zum Mehrfachempfang beschrieben, bei dem das Fernsehsignal über mehrere Antennen sowohl in analoger Form, als auch in Form digitaler, gemäß dem DVB-T-Standard codierter Videosignale empfangen wird. Das mehrfach empfangene digitale Signal wird dabei im Verlauf einer Quellen-Decodierung, die in einem Empfänger der Kanal-Decodierung nachgeschaltet ist, durch Auswahl eines jeweils am geringsten durch Störungen beeinflussten codierten Transportstrompakets aus den unterschiedlichen, digitalen Empfangszweigen rekonstruiert. Die Kombination der codierten Transportstrompakete ist wiederum nur möglich, weil das Format der Transportströme in den einzelnen Empfangszweigen identisch ist. Ob ein codiertes Transportstrompaket fehlerhaft ist, kann verhältnismäßig leicht anhand von Kontrollsignalen erkannt werden. Enthält das rekonstruierte digitale Bildsignal noch Störungen, so sieht das Verfahren gemäß der WO 03/103280 A1 des Weiteren vor, Bilder des decodierten digitalen Signals durch eine gewichtete Addition mit den inhaltlich bis auf die Störungen identischen Bildern, wie sie über den analogen Zweig empfangen werden, zu kombinieren, so dass mit dem Summenbild ein verbessertes Bild zur Verfügung steht. Die Kombination von Bildinhalten ist hierbei direkt möglich, da über den digitalen und den analogen Empfangszweig empfangene Bilder inhaltlich identisch sind. Die Synchronisation des digitalen und des analogen Signals wird zum einen durch eine Korrelation von Audiosignalen in dem digitalen und dem analogen Empfangszweigs sowie durch anschließenden Vergleich der Videosynchronisationssignale erreicht.

In dem Verfahren zum Mehrfachempfang gemäß der DE 10 2004 020 503 A1 werden zwei über unterschiedliche Signalempfangs- und Verarbeitungspfade bis auf Störungen vollständig rekonstruierte Einzelbilder eines analogen Fernsehsignals durch Bildverarbeitungsalgorithmen in ihrer Qualität verglichen. Da es sich bei den empfangenen Signalen um analog übertragene Fernsehsignale handelt, dienen als Bewertungskriterien für den Vergleich stochastische Anteile im Bild, die der Betrachter als Rauschen wahrnimmt, Störmuster oder durch eine Reflektion erzeugte "Geisterbilder". Die Einzelbilder werden dabei durch Mehrfachempfang desselben Fernsehsignals gewonnen, so dass sie inhaltlich weitgehend identisch sind und damit direkt verglichen werden können. Ein verbessertes Einzelbild wird aus Bildbereichen zusammengesetzt, die jeweils demjenigen Einzelbild entnommen sind, das für diesen Bereich eine höhere Bildqualität gemäß dem durch den Bildverarbeitungsalgorithmus ermittelten Maß aufweist. Durch Verwendung von Bildverarbeitungsalgorithmen ist das Verfahren gemäß der DE 10 2004 020 503 A1 zwar unabhängig von den verwendeten Übertragungsverfahren für die Fernsehsignale. Allerdings wird anhand der Bewertungskriterien für den Vergleich der Bildqualität der Einzelbilder der Bildinhalt selbst ausgewertet, so dass es in Abhängigkeit vom übertragenen Bildinhalt zu einer Fehlbewertung der Bildqualität kommen kann.

Die aus dem Stand der Technik bekannten Verfahren zum Mehrfachempfang setzen somit voraus, dass die über mehrere Empfangszweige empfangenen Bildsequenzen auf der Ebene der Kanal-Codierung, der Ebene der Quellen-Codierung oder schließlich in Bezug auf die Bildauflösung und die Bildgeometrie identisch sind. Andernfalls lassen sich entweder die codierten Datenpakete nicht miteinander verrechnen oder ein Vergleich von Bildinhalten über Bildverarbeitungsalgorithmen würde falsche Resultate liefern. Zudem ist die Zuverlässigkeit eines Bestimmens der Qualität eines rekonstruierten Bildes auf Grundlage eines Auswertens des Bildinhalts abhängig vom Inhalt des Bildes.

In Dokument WO2005/076623 A2 sind ein Verfahren und eine Vorrichtung beschrieben, mittels welchen Fehler in Bildern eines ersten Fernsehsignals ausgebessert werden können, indem Regionen mit Fehlern durch entsprechende Regionen aus Bildern eines zweiten Fernsehsignals ersetzt werden. Zum Erkennen der Fehler wird in einem MPEG Decoder die Bildsequenz aus Videodatenpaketen gewonnen. Gleichzeitig wird durch den Decoder erkannt, welche Codeworte der Datenpakete falsch empfangen wurden und in dem Bild zu Regionen mit Fehlern geführt haben. Eine Synthetisierungseinrichtung ersetzt die fehlerhaften Regionen in dem Bild der ersten Sequenz durch entsprechende Regionen der zweiten Bildsequenz. Um die Bildsequenzen auch zeitlich zu synchronisieren, werden Zeitstempel verglichen, die einzelnen Bildern der beiden Bildsequenzen zugeordnet sind. Für den Fall, dass die beiden Bildsequenzen, unterschiedliche Auflösungen aufweisen, können die Bilder skaliert werden, wobei die Parameter zur Anpassung der Bilder bekannt sein müssen.

In der EP 1 748 655 A ist ein Verfahren beschrieben, bei dem in einer Bildsequenz ganze Bilder ersetzt werden, welche beim Empfang durch Empfangsfehler gestört worden sind. Die benötigten Bilder werden aus einer zweiten Bildsequenz entnommen. Um die beiden Bildsequenzen gleichzeitig zu synchronisieren, wird als eine Möglichkeit eine zeitliche Korrelation der beiden Bildsequenzen vorgeschlagen. Vorraussetzung für diese Form der Synchronisation ist, dass bereits eine grobe Schätzung davon vorgegeben wird, wie groß der zeitliche Versatz von zwei einander entsprechenden Bildern bei den beiden Bildsequenzen ist.

Aus der wissenschaftlichen Veröffentlichung "David G. Lowe: Distinctive Image Features From Scale-Invariant Keypoints, International Journal of Computer Vision, Bd. 60, Nr. 2, 31. Oktober 2004, Seiten 91 - 110, ISSN: 1573-1405" ist ein Verfahren zur sogenannten Bildregistrierung bekannt, durch welches ein Abgleich zweier ähnlicher Bilder erfolgen kann. Hierzu werden bestimmte invariante Merkmale der Bilder extrahiert und miteinander verglichen. Diese Merkmale können dann auch zur sicheren Objekterkennung herangezogen werden. Der Merkmalsabgleich erfolgt nach einem geometrischen Verfahren über die Ermittlung der Ähnlichkeit von Merkmalspositionen.

In einem Fachartikel von Rohde et al. (G.K. Rohde et al. "Measuring similarity to sub-pixel accuracy", Biomedical Imaging: Nano to Macro, 2006. 3^{rd}

IEEE International Symposium on, 9. April 2006, Seiten 638-641) werden Verfahren zur Bestimmung der Ähnlichkeit bzw. Registrierung zweier Bilder beschrieben, wobei hierzu auch die Bestimmung der Summe der quadratischen Differenzen zur Ähnlichkeitsbestimmung zweier Bilder gehört. Auch aus der US 2005/271302 A1 ist die Verwendung der Summe der quadratischen Differenzen für einen Bildvergleich bekannt.

Es ist daher Aufgabe der vorliegenden Erfindung, ein Verfahren zum Gewinnen von Bildern, welche über einen Mehrfachempfang empfangen wurden, bereitzustellen, ohne dabei auf eine identische Kanal- oder Quellen-Codierung, eine identische Kompression oder eine identische örtliche Auflösung der einander entsprechenden Bilder in den verschiedenen Empfangszweigen angewiesen zu sein. Außerdem soll eine zuverlässige Lokalisation gestörter Bildbereiche gewährleistet sein.

Die Aufgabe wird mit einem Verfahren gemäß Anspruch 1 gelöst. Zu der Erfindung gehören auch ein Verfahren gemäß Anspruch 3 und eine Fernsehempfangseinheit gemäß Anspruch 10. Vorteilhafte Ausführungen der Erfindung sind in den Unteransprüchen enthalten.

Erfindungsgemäß werden eine erste mehrere Bilder umfassende codierte Bildsequenz und (vorzugsweise gleichzeitig) eine zweite mehrere Bilder umfassende codierte Bildsequenz empfangen. Die Bilder der ersten und der zweiten Bildsequenz entsprechen sich dabei, das heißt, sie weisen ähnliche Inhalte auf, ohne dabei zwingend dieselbe Bildauflösung oder vollständig übereinstimmende Bilder zu zeigen. Nicht vollständig übereinstimmend sind Bilder insbesondere dann, wenn ein Bild aus der zweiten Bildsequenz nur einen Ausschnitt aus dem Bild der ersten Bildsequenz darstellt. Beim Decodieren eines Bildes aus der ersten codierten Bildsequenz werden zu Regionen des decodierten Bildes Werte ermittelt, die die Empfangsqualität oder kurz Qualität des den Bildinhalt der entsprechenden Region repräsentierenden empfangenen Codeworts quantitativ angeben. Ein solcher Wert kann wie oben beschrieben sowohl bei der Kanal-Decodierung eines Datenpakets als auch bei der Quellen-Decodierung eines Bildblocks in zuverlässiger Weise ermittelt werden. Sind die Bilder beispielsweise im MPEG-Standard codiert, können Information über die Qualität des empfangenen Codewortes auf der Ebene der Quellen-Codierung durch Überprüfung der Codeworte der Entropie-Codierung (wie z.B. einer Codierung mit variabler Codewortlänge) oder durch Überprüfung der Syntax des MPEG-Transportstroms gewonnen werden. Ein Wert für die Qualität des empfangenen Codes wird vorzugsweise für Bildblöcke der Größe 8 x 8 Bildpunkte oder 16 x 16 Bildpunkte ermittelt.

In einem weiteren Schritt der erfindungsgemäßen Verfahren wird zu dem decodierten Bild aus der ersten Bildsequenz zunächst ein entsprechendes Stützbild aus der zweiten codierten Bildsequenz zugeordnet. Werden die beiden Bildsequenzen beispielsweise mit einem leichten Zeitversatz gesendet, ist es vorzugsweise durch Verwendung von Verzögerungselementen nötig, die beiden Bildsequenzen zeitlich zu synchronisieren. Wenn das Stützbild aus der zweiten Bildsequenz zugeordnet, also verfügbar ist, wird es decodiert. Zudem werden, wie im Fall des Bildes aus der ersten Bildsequenz, Werte für Regionen des Stützbildes ermittelt, die die Qualität des empfangenen Codes quantitativ angeben.

Um auch Bildsequenzen unterschiedlicher Auflösung und auch nur ausschnittsweise vorhandene Bilder nutzen zu können, wird durch Zuordnen der Regionen des Stützbildes zu Regionen des Bildes der ersten Bildsequenz sichergestellt, dass in einem weiteren Verfahrensschritt einander entsprechende Bildinhalte kombiniert werden können. Für den Fall, dass die Auflösung des Bildes und die Bildinhalte der ersten Bildsequenz und des Stützbildes identisch sind, kann eine korrekte Zuordnung automatisch im normalen Betrieb des Systems erfolgen.

Falsch oder fehlerhaft übertragene Regionen im Bild der ersten Bildsequenz werden korrigiert, indem eine fehlerhafte Region des ersten Bildes unter Verwendung einer zugeordneten Region des Stützbildes verändert wird. Diese Änderung kann beispielsweise in einem Ersetzen der fehlerhaften Region oder einer gewichteten Addition von Bildpunktwerten der einander zugeordneten Regionen bestehen. Ein Vergleich der Bildqualität der beiden Regionen ist dabei unabhängig vom Bildinhalt, da eine Kombination aus den die Qualität des empfangenen Codes angebenden Werten verwendet wird. Das Verwenden einer solchen Kombination umfasst insbesondere ein Vergleichen der Werte oder, wenn es sich um die direkte Information darüber handelt, ob ein Paketverlust vorlag oder nicht, die Auswertung dieser Informationen.

Für den Fall, dass mehr als zwei Bildsequenzen empfangen werden, wird das Verfahren gemäß Anspruch 1 bzw. 3 entsprechend auch für die weiteren

Bildsequenzen angewendet, wobei jede weitere Bildsequenz wie die zweite mehrere Bilder umfassende codierte Bildsequenz behandelt wird. Bei dem Schritt des Änderns einer Region des ersten Bildes wird dabei bei der Auswertung der Kombination der Werte durch ein vorbestimmtes Kriterium die Zahl der insgesamt empfangenen Bildsequenzen berücksichtigt.

Die Reihenfolge der Ausführung der Schritte kann bei dem Verfahren gemäß Anspruch 1 bzw. 3 variiert werden: Beispielsweise ist zunächst eine Decodierung des Stützbildes und eine Zwischenspeicherung desselben denkbar, bevor es als das einem ersten Bild entsprechende Stützbild zugeordnet wird.

Mit den erfindungsgemäßen Verfahren ist es möglich, einen Mehrfachempfang auch für Fernsehprogramme zu ermöglichen, die über unterschiedliche Übertragungsstandards, also unter Verwendung unterschiedlicher Kanal- und Quellen-Codierungen sowie unterschiedlicher Bildformate ausgestrahlt werden. Ein solcher Fall einer sogenannten Übertragungsdiversität liegt beispielsweise bei den beiden Übertragungsstandards "Digital Video Broadcasting - Terrestrial" (DVB-T) und "Digital Video Broadcasting - Handheld" (DVB-H) vor. Der für Heim-Fernsehgeräte geeignete DVB-T-Standard kann zur Übertragung von Bildern in der Auflösung für "Standard Definition TV" (SDTV) oder in der Auflösung für "High Definition TV" (HDTV) benutzt werden. Für die Quellencodierung wird hauptsächlich der Standard MPEG-2 (Moving Picture Expert Group) verwendet. Auf der Ebene der Kanal-Codierung und der Signalmodulation sind verschiedene Verfahren in Gebrauch. Der DVB-H-Standard wird dagegen für die Übertragung von Fernsehbildsignalen zu Mobiltelefonen und anderen kleinen mobilen Geräten eingesetzt. Die Bildauflösung kann unter Umständen lediglich 320 x 240 Bildpunkte betragen. Für die Übertragung wird der MPEG-4-Standard verwendet. Auch im Bezug auf die Übertragungsverfahren, d. h. Kanalcodierung und Modulationsverfahren, weist der DVB-H-Standard Unterschiede zum DVB-T-Standard auf.

Für den Fall, dass ein Sender dieselbe Bildsequenz mittels zweier Übertragungsstandards überträgt, die unterschiedliche (in Bildpunkten bemessene) Seitenverhältnisse aufweisen, müssen die Bilder der Bildsequenz angepasst werden. Dazu werden die Ränder der zu übertragenden Bilder weggeschnitten, um das vom jeweiligen Übertragungsstandard erforderte Seitenverhältnis zu erhalten (Englisch: Cropping). Schließlich ist es bei einer Übertragung z.B. mittels des DVB-H-Standards auch denkbar, dass die Bilder mit einer stärkeren Kompression codiert werden, um den geringen Bandbreiten bei der Übertragung der Bilder auf Mobiltelefone gerecht zu werden. Da die Kompression verlustbehaftet ist, weist ein stärker komprimiertes Bild nach der Decodierung weniger Details auf, so dass sich auch hier ein Unterschied zu einem mittels des DVB-T-Standards übertragenen Bildinhalts ergibt.

Die Übertragung ein und derselben Bildsequenz über verschiedene Übertragungsstandards kann somit zur Folge haben, dass empfängerseitig Bilder zur Verfügung stehen, die sich zwar inhaltlich entsprechen, die sich allerdings nicht mit Mitteln des Stands der Technik ineinander überführen lassen.

Trotz der Unterschiede in der Qualität von Fernsehsignalen, wie sie im Rahmen der Übertragungsdiversität heutzutage beispielsweise in Form von DVB-T-Signalen und DVB-H-Signalen zur Verfügung stehen, ist es mit den erfindungsgemäßen Verfahren möglich, solche Signale im Rahmen eines Mehrfachempfangs zu kombinieren. So können beispielsweise hochaufgelöste DVB-T-Fernsehsignale im Falle einer starken Störung, zum Beispiel in Form von Paketverlusten, in der Qualität erheblich aufgebessert werden, indem die verlustig gegangenen Bildbereiche, d.h. gestörte Regionen eines Bildes, durch niedrig aufgelöste Bildbereiche aus einem parallel empfangenen DVB-H-Signal aufgefüllt werden.

Bei dem Verfahren gemäß Anspruch 1 berücksichtigt das Auswählen eines dem ersten Bild entsprechenden Stützbildes des Weiteren einen Bildversatz, wie er durch unterschiedliche senderseitige Verarbeitungsdauern für die Bildsequenzen bei der Übertragung zustande kommen kann. Für den Fall, dass es sich um einen konstanten Bildversatz handelt, kann dieser in einer Initialisierungsphase oder in größeren zeitlichen Abständen bestimmt werden.

Für eine automatische Bestimmung des Bildversatzes umfasst der Schritt des Zuordnens eines dem ersten Bild entsprechenden Stützbildes vorteilhafterweise die Schritte:
d1) Decodieren einer Mehrzahl von Bildern aus der zweiten codierten Bildsequenz und jeweiliges Ermitteln von Werten für Regionen jedes Bildes, wobei die Werte die Qualität des empfangenen Codes quantitativ angeben,
d2) Berechnen je eines Ähnlichkeitswerts für die Ähnlichkeit zwischen dem ersten Bild und jedem Bild aus der Mehrzahl von Bildern in Abhängigkeit von den Werten für die Regionen des jeweiligen Bildes,
d3) Ermitteln eines Bildversatzes zwischen der ersten und der zweiten Bildsequenz auf Grundlage der berechneten Ähnlichkeitswerte,
d4) Auswählen eines dem ersten Bild entsprechenden Stützbildes aus der zweiten codierten Bildsequenz anhand des ermittelten Bildversatzes.

Durch Vergleich eines Bildes aus der ersten Bildsequenz mit mehreren Bildern aus der zweiten Bildsequenz kann durch Herausfinden desjenigen Bildes aus der zweiten Bildsequenz mit der größten Ähnlichkeit zum Bild der ersten Bildsequenz bestimmt werden, um wie viele Bilder die beiden Bildsequenzen gegeneinander versetzt empfangen werden. Ein die Ähnlichkeit wiedergebender Ähnlichkeitswert wird dabei berechnet, indem Intensitätswerte der Bildpunkte des ersten Bildes von Intensitätswerten entsprechender Bildpunkte des zweiten Bildes subtrahiert werden und für das gesamte Bild daraus die Summe der Quadrate dieser Differenzen berechnet wird. Andere, eine Distanz im mathematischen Sinne ausdrückende Maße sind ebenfalls geeignet. Als Intensitätswert wird bevorzugt die Helligkeit eines Bildpunktes, d.h. seine Luminanz, herangezogen. Eine Region, für die ein die Qualität des empfangenen Codes angebender Wert anzeigt, dass die Bildregion gestört ist, wird nicht beim Berechnen des Ähnlichkeitswerts berücksichtigt.

Die eben beschriebene Bestimmung des Bildversatzes kann auch kontinuierlich, d. h. für aufeinander folgende Bilder der ersten Bildsequenz durchgeführt werden.

Um auch Ähnlichkeitswerte für Bilder mit unterschiedlichen Auflösungen berechnen zu können, wird die Bestimmung des Bildversatzes in vorteilhafter Weise wie folgt ausgestaltet:
d2.1) Berechnen je eines abgewandelten Bildes aus jedem Bild der Mehrzahl der Bilder mittels einer durch Abbildungsparameter definierten Abbildungs- funktion,
d2.2) Berechnen je eines Ähnlichkeitswerts für die Ähnlichkeit zwischen dem ersten Bild und jedem abgewandelten Bild in Abhängigkeit von den Werten für die Regionen des jeweiligen Bildes.

Indem ein Bild aus der zweiten Bildsequenz vor einem Vergleich mit dem Bild aus der ersten Bildsequenz durch eine Abbildungsfunktion zunächst gestreckt oder gestaucht, d. h. skaliert wird, und gegebenenfalls in Bezug auf das Bild aus der ersten Bildsequenz verschoben wird, kann sowohl die Auflösung der Bilder angeglichen werden, als auch erreicht werden, dass auch tatsächlich zusammengehörende Bildbereiche miteinander verglichen werden, wenn das Bild der zweiten Bildsequenz lediglich einen Ausschnitt aus dem Bild der ersten Bildsequenz darstellt, wie es beispielsweise beim Cropping der Fall ist. Die Abbildungsparameter für die Abbildungsfunktion können dabei in der weiter unten beschriebenen Weise mit einem iterativen Verfahren bestimmt werden, falls sie nicht bekannt sind.

Stellt eines der Bilder lediglich einen Ausschnitt eines anderen Bildes dar, ergeben sich Randbereiche, für die aus dem Bildausschnitt keine Information für die Bestimmung der Ähnlichkeit hervorgeht. Dies ist bei der Berechnung des Ähnlichkeitswertes leicht zu berücksichtigen. Die Skalierung und Verschiebung der Bilder stellt eine affine Abbildung dar. Somit kann eine Region eines Bildes, bei der anhand eines die Qualität des empfangenen Codes angebenden Werts zu erkennen ist, dass sie gestörte Bildinhalte aufweist, auch in dem zugehörigen abgewandelten Bild bestimmt werden und bei der Berechnung des Ähnlichkeitswerts wie oben beschrieben ausgenommen werden.

In gleicher Weise ist es vorteilhaft, das Verfahren beim Schritt des Zuordnens einer Region in folgender Weise auszugestalten:
f1) Berechnen einer abgewandelten Region des Stützbildes mittels einer durch Abbildungsparameter definierten Abbildungsfunktion,
f2) Zuordnen zumindest einer abgewandelten Region des Stützbildes zu wenigstens einer Region des ersten Bildes auf Grundlage der Abbildungsparameter.

Somit wird es möglich, das Verfahren auch für Bildsequenzen mit unterschiedlicher Bildauflösung und auch in dem Fall einzusetzen, dass eine Bildsequenz lediglich Teilbilder aus der anderen Bildsequenz enthält. Die Abbildungsfunktion muss dabei nur auf diejenigen Regionen des Stützbildes angewandt werden, die tatsächlich beim Ändern einer Region des ersten Bildes Verwendung finden. Es ist aber auch denkbar, aus einem Stützbild zunächst ein vollständiges abgewandeltes Bild mit einer Auflösung, wie sie das erste Bild aufweist, zu berechnen und abzuspeichern, um anschließend auf die benötigten Regionen zuzugreifen.

Die Berechnung der Abbildungsparameter für die Abbildungsfunktion kann in iterativer Weise bei der Bestimmung des Bildversatzes oder bei dem Schritt f des Zuordnens einer Region erfolgen. Für den Fall, dass optimale Abbildungsparameter bei dem Schritt des Zuordnens einer Region berechnet werden sollen, ist das Verfahren gemäß Anspruch 3 bei dem Schritt des Zuordnens einer Region in folgender Weise ausgestaltet:
f1) Berechnen eines abgewandelten Bildes aus dem Stützbild mittels einer durch Abbildungsparameter definierten Abbildungsfunktion,
f2) Berechnen eines Ähnlichkeitswerts für die Ähnlichkeit zwischen dem ersten Bild und dem abgewandelten Bild in Abhängigkeit von den Werten für die Regionen des jeweiligen Bildes,
f3) Ändern der Abbildungsparameter in Abhängigkeit von dem Ähnlichkeitswert,
f4) Wiederholen der Schritte f1, f2 und f3, solange bis der Ähnlichkeitswert oder die durch Schritt f3 bewirkte Änderung der Abbildungsparameter einem vorbestimmten Kriterium genügt,
f5) Zuordnen einer Region des Stützbildes zu einer Region des ersten Bildes in Abhängigkeit von den Abbildungsparametern.

Wie bereits erwähnt, lässt sich gemäß Anspruch 1 das iterative Verfahren zum Berechnen optimaler Abbildungsparameter auch während des Ermittelns des Bildversatzes einsetzen. Die dabei ermittelten optimalen Abbildungsparameter lassen sich dann auch bei dem Schritt des Zuordnens einer Region des Stützbildes verwenden. In einer anderen Ausführungsform des erfindungsgemäßen Verfahrens können Abbildungsparameter allerdings auch getrennt zum einen während des Ermittelns des Bildversatzes und zum anderen bei dem Schritt des Zuordnens einer Region des Stützbildes ermittelt werden.

Durch die Schritte f1 bis f4 wird ein Verfahren zum Optimieren des Ähnlichkeitswerts beschrieben, durch das Abbildungsparameter für die Abbildungs- funktion gefunden werden können, mit denen eine möglichst gute Deckung zwischen dem abgewandelten Bild und dem Bild aus der ersten Bildsequenz erreicht wird. Das Ändern der Abbildungsparameter in Abhängigkeit von dem Ähnlichkeitswert geschieht dabei bevorzugt in folgender Weise: Zunächst wird für beliebige Abbildungsparameter ein abgewandeltes Stützbild und dazu ein Ähnlichkeitswert (durch Vergleich mit Bild aus der ersten Bildsequenz) bestimmt. Anschließend werden die Abbildungsparameter geändert und erneut ein abgewandeltes Stützbild und dazu ein neuer Ähnlichkeitswert bestimmt. Wird durch den neuen Ähnlichkeitswert angezeigt, dass das dazugehörige abgewandelte Stützbild eine größere Ähnlichkeit zu dem Bild aus der ersten Bildsequenz aufweist als das zuvor berechnete abgewandelte Stützbild, so hat man verbesserte Abbildungsparameter gefunden. Diese Verbesserung der Abbildungsparameter kann wiederholt, d.h. iterativ, durchgeführt werden, bis nur noch geringfügige Verbesserungen erzielt werden. Vorzugsweise geschieht die Änderung der Abbildungsparameter nach dem Prinzip eines Gradientenabstiegsverfahrens. Insbesondere kommt (bevorzugt in Verbindung mit einem Ähnlichkeitswert, der als Summe der Quadrate der Differenzen von Bildpunktwerten berechnet wird) das Gauß-Newton-Verfahren oder das Levenberg-Marquardt-Verfahren zum Einsatz.

Weisen die Bilder der ersten codierten Bildsequenz im Vergleich zu den Bildern der zweiten codierten Bildsequenz ein unterschiedliches Verhältnis von in Bildpunkten bemessenen Bildkantenlängen der Bilder und/oder eine unterschiedliche Bildauflösung auf, ergibt sich, dass für die Verarbeitung der beiden Bildsequenzen unterschiedlich viel Rechenleistung benötigt wird. Wird als zweite Bildsequenz, aus der lediglich die Stützbilder zur Korrektur von Fehlern in den Bildern der ersten Bildsequenz entnommen werden, die Bildsequenz mit den kleineren bzw. schlechter aufgelösten Bildern verwendet, reicht für die Berechnung der Stützbilder eine im Vergleich zur Verarbeitung der ersten Bildsequenz weniger rechenstarke Verarbeitungseinheit.

Die erfindungsgemäßen Verfahren ermöglichen in vorteilhafter Weise eine Korrektur von fehlerhaft empfangenen Bildregionen auch für Bildsequenzen, bei denen die Bilder einer Bildsequenz lediglich einen Ausschnitt aus entsprechenden Bildern einer anderen Bildsequenz zeigen, wie es beispielsweise beim oben beschriebenen Cropping der Fall ist.

Sind die Bilder der ersten codierten Bildsequenz im Vergleich zu den Bildern der zweiten codierten Bildsequenz unterschiedlich codiert, ergibt sich der vorteilhafte Effekt, dass bei Störungen, die die Signale beider Bildsequenzen betreffen, die resultierenden Fehlermuster in den Bildern mit hoher Wahrscheinlichkeit unterschiedlich sind. Somit ist es wahrscheinlicher, durch Kombination von Regionen aus unterschiedlichen Bildsequenzen ein verbessertes Bild berechnen zu können.

Weiterhin ist es vorteilhaft, wenn die Verfahren dazu ausgelegt sind, Bildsequenzen zu verarbeiten, die aus Datenströmen entsprechend dem Standard "Digital Video Broadcasting - Terrestrial" oder "Digital Video Broadcasting - Handheld" oder "Terrestrial - Digital Multimedia Broadcasting" entnommen sind.

Werden die Verfahren in einer Fernsehempfangseinheit für ein Fahrzeug umgesetzt, kann damit in vorteilhafter Weise der Fernsehempfang in einem solchen Fahrzeug optimal ausgestaltet werden.

Die beschriebenen erfindungsgemäßen Verfahren lassen sich ohne Schwierigkeiten mit bereits bekannten Verfahren zur Fehlerkorrektur, wie sie beispielsweise für Bildsequenzen aus einem einzigen Datenstrom nach dem MPEG-Standard bekannt sind, kombinieren.

Im Folgenden werden Ausführungsbeispiele der Erfindung beschrieben. Dazu zeigen:
- Fig. 1: Skizzen von Bildinhalten, wie sie sich durch die einzelnen Schritte des erfindungsgemäßen Verfahrens verändern,
- Fig. 2: ein Blockschaltbild für eine erfindungsgemäße Fernsehemp-fangseinheit und
- Fig. 3: ein Signalflussdiagramm einer Ausführungsform des erfindungsgemäßen Verfahrens.

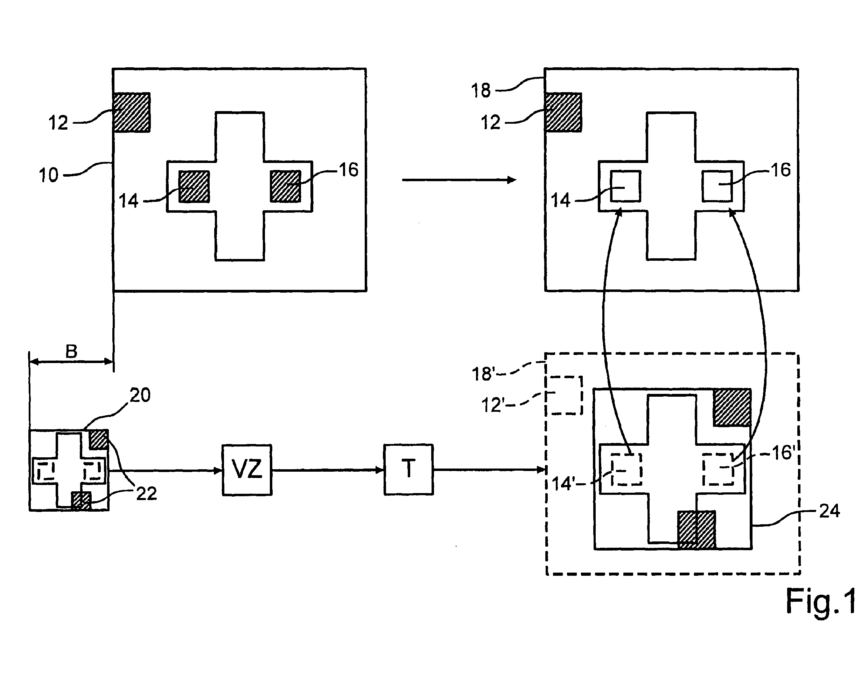

In Fig. 1 ist dargestellt, wie sich der Inhalt eines Bildes 10 aus einer ersten Bildsequenz und der Inhalt eines Bildes 20 aus einer zweiten Bildsequenz durch Anwendung der Schritte aus dem erfindungsgemäßen Verfahren ändern. In dem Bild 10 ist als Bildinhalt ein Kreuz zu sehen. Durch Fehler bei der Übertragung weist das Bild 10 drei Regionen 12, 14, 16 auf, in denen der Bildinhalt gestört ist. Das Bild 10 entstammt einem Datenstrom nach dem MPEG-Standard, so dass jede gestörte Region 12, 14, 16 die Form eines Blocks haben kann. Die Tatsache, dass die Blöcke 12, 14, 16 fehlerhaft sind, ist durch die Dekodierung des MPEG-Signals zuverlässig erkannt worden.

Da die erste Bildsequenz, aus der das Bild 10 stammt, Bilder mit hoher Auflösung liefert, ist das Bild 10 als Bild 18 zur Ausgabe vorgesehen.

Das aus der zweiten Bildsequenz stammende Bild 20 ist das dem Bild 10 entsprechende Bild aus der zweiten Bildsequenz. Es stellt lediglich einen Ausschnitt des Bildes 10 dar und ist auch kleiner, d.h. geringer auflösend. Zudem weist es wie das Bild 10 ebenfalls Regionen 22 mit Übertragungsfehlern auf. Das Bild 20 ist um einen Rahmen, d.h. die Dauer eines Bildes in einer Videosequenz, früher in der Empfangseinheit eingetroffen als das Bild 10. Daher beträgt der Bildversatz B genau ein Bild. Das Bild 20 der zweiten Bildsequenz wird von einer Verzögerungseinheit VZ um die Dauer eines Bildes verzögert, so dass es zeitgleich mit dem Ausgabebild 18 bearbeitet werden kann. Durch die Synchronisation des Bildes 20 mit dem Ausgabebild 18 erfolgt anders ausgedrückt eine Zuordnung des Bildes 20 als Stützbild für das Ausgabebild 18. In einer Transformationseinheit T wird das verzögerte Bild 20 durch eine Abbildungsfunktion zusätzlich in der Weise verschoben und skaliert, dass Bildpunkte des Bildes 20 im Koordinatensystem des Ausgabebilds 18 auf Bildpunkten zu liegen kommen, welche Bildpunkten des Ausgabebilds 18 entsprechen. In der Fig. 1 ist dies dadurch dargestellt, dass das transformierte und verzögerte Bild 20 in einem Koordinatensystem 18' des Ausgabebildes 18 dargestellt ist. Das durch die Abbildungsfunktion der Transformation T abgewandelte Bild 24 erscheint im Koordinatensystem 18' des Bildes 18 in der Mitte. Als gestrichelte Kästen sind die Positionen der fehlerhaften Blöcke 12, 14, 16 aus dem Ausgabebild 18 zu sehen. Dem abgewandelten Bild 24 können für zwei der fehlerhaften Regionen des Ausgabebildes 18 fehlerfreie Bildinformationen 14', 16' entnommen werden, wie ein nicht dargestellter Wert, der die Qualität des empfangenen Codes ausdrückt, angibt. Daher werden die im Ausgabebild 18 fehlerhaften Regionen 14, 16 durch die zugeordneten Regionen 14', 16' aus dem abgewandelten Bild 24 ersetzt. Dies ist durch zwei Pfeile symbolisiert. Für eine dritte fehlerhafte Region 12 kann dem abgewandelten Bild 24 keine Information entnommen werden. Dies ist in der Figur 1 durch die gestrichelt dargestellte Region 12' symbolisiert.

Für die nicht durch das abgewandelte Bild 24 korrigierbare fehlerhafte Region 12 im Ausgabebild 18 besteht die Möglichkeit, diese Region fehlerhaft anzuzeigen oder weitere Bildinformationen aus einer dritten Bildsequenz gemäß dem erfindungsgemäßen Verfahren zu entnehmen.

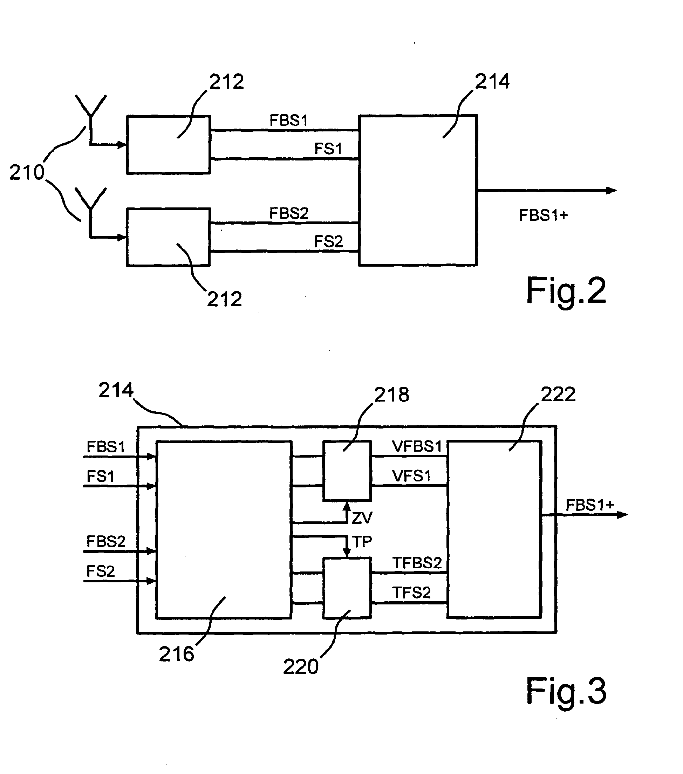

In der Fig. 2 ist eine mögliche Schaltungsanordnung zur erfindungsgemäßen Fernsehempfangseinheit gezeigt, die auf einem hochaufgelösten, qualitativ hochwertigen Fernsehbildsignal FBS1 und einem niedrig aufgelösten Fernsehbildsignal FBS2 mit niedriger Qualität, das als Stützsignal dient, basiert. Die Fernsehbildsignale FBS1 und FBS2 weisen einander entsprechende Bildinhalte auf.

Die Schaltung zur erfindungsgemäßen Fernsehempfangseinheit in Fig. 2 enthält mindestens zwei Empfangsantennen 210 und mindestens zwei Empfangseinheiten 212 für digitale Fernsehbildsignale. Die Ausgänge der beiden Empfangseinheiten sind mit einer Einheit 214 verbunden, die durch Kombination der beiden Fernsehbildsignale FBS1 und FBS2 nach der Decodierung ein qualitativ höherwertiges Fernsehbildsignal FBS1+ erzeugt. Das hochaufgelöste Fernsehbildsignal FBS1 wird unter Ausnutzung des niedrig aufgelösten Fernsehbildsignals FBS2 in seiner Qualität verbessert. Dazu werden in beiden Fernsehbildsignalen die auftretenden Block-, Zeilen- und Bildverluste bei der Decodierung in der jeweiligen Empfangseinheit detektiert. Im Falle einer prädiktiven Decodierung basierend auf Bewegungskompensation (wie bekannt aus der MPEG-Decodierung) wird die Fehlerfortpflanzung in nachfolgende Bilder ebenfalls berücksichtigt. Die resultierenden Fehlersignale FS1 und FS2 werden von dem Empfangseinheiten als Seiteninformation an die Einheit 214 weitergegeben.

In der Fig. 3 ist ein mögliches Signalflussdiagramm der Einheit 214 aus Fig. 2 gezeigt. Fernsehbildsignale FBS1 und FBS2 und zugehörige Fehlersignale FS1 und FS2 bilden die Eingangssignale einer Einheit 216 zum Schätzen einer Verzögerung und von Transformationsparametern. In dieser Einheit werden die Verzögerung und die Transformationsparameter ermittelt, die zur Synchronisation bzw. zur Anpassung der örtlichen Auflösung des niedrig aufgelösten Fernsehbildsignals FBS2 an die örtliche Auflösung des hochaufgelösten Fernsehbildsignals FBS1 benötigt werden. Es handelt sich hierbei somit um eine Einheit zum Schätzen des Bildversatzes und der Abbildungsparameter für die Abbildungsfunktion.

Da die Bildinhalte der beiden Fernsehbildsignale FBS1 und FBS2 durch senderseitiges Abschneiden der Bildränder nicht vollkommen identisch sind (Cropping), umfasst die Transformation sowohl eine Skalierung als auch eine Verschiebung. Die optimalen Transformationsparameter bzw. Abbildungsparameter werden geschätzt, da die Parameter der senderseitigen Bildkonvertierung nicht übertragen werden und somit am Empfänger unbekannt sind. Der Schätzung liegt eine Kostenfunktion als Maß für die Ähnlichkeit zweier Bilder zugrunde, die minimiert werden muss. Sie ist hier als mittlerer quadratischer Fehler zwischen dem Fernsehbildsignal FBS1 und dem transformierten Fernsehbildsignal TFBS2 definiert. Als Fehlermaß dient dabei die Differenz von Intensitätswerten einzelner Bildpunkte. Aus Effizienzgründen werden zur Bestimmung der Transformationsparameter nicht alle denkbar möglichen Werte für die Parameter der Transformation durchlaufen. Statt dessen wird auf ein Optimierungsverfahren (beispielsweise ein Gradientenabstiegsverfahren) zurückgegriffen.

In der Empfangseinheit ist durch unterschiedliche Verarbeitungsdauern auf Sender- und Empfängerseite und durch Laufzeitunterschiede bei der Übertragung über die Luftschnittstelle ein zeitlicher Versatz zwischen den beiden Fernsehbildsignalen FBS1 und FBS2 vorhanden. Dieser Bildversatz wird ebenfalls in der Einheit 216 zum Schätzen der Verzögerung und der Transformationsparameter ermittelt. Die Bestimmung des zeitlichen Versatzes erfolgt im Zusammenhang mit der eben beschriebenen Bildtransformation und wird als Erweiterung der oben beschriebenen Optimierung um einen zusätzlichen Parameter, der Zeit, umgesetzt.

Die Ausgangssignale der Einheit 216 zum Schätzen der Verzögerung und der Transformationsparameter sind die vier ursprünglichen Eingangssignale FBS1, FS1, FBS2, FS2, der zeitliche Versatz ZV und die Transformationsparameter TP. Der ermittelte zeitliche Versatz ZV dient als Eingangssignal für eine Verzögerungseinheit 218, in der das Fernsehbildsignal FBS1 und das zugehörige Fehlersignal FS1 gemäß ZV verzögert werden. So wird die Synchronität zwischen dem verzögerten Fernsehbildsignal VFBS1, dem zugehörigen verzögerten Fehlersignal VFS1, dem Fernsehbildsignal FBS2 und dem zugehörigen Fehlersignal FS2 sichergestellt.

In einer Transformationseinheit 220, die parallel zur Verzögerungseinheit 218 angeordnet ist, werden das Fernsehbildsignal FBS2 und das zugehörige Fehlersignal FS2 anhand der geschätzten Transformationsparameter TP mit einer Abbildungsfunktion transformiert. Als Ausgangssignale der Transformationseinheit 220 stehen das transformierte Fernsehbildsignal TFBS2 und das zugehörige, transformierte Fehlersignal TFS2 zur Verfügung. Beide sind in ihrer Bildauflösung identisch mit den zugehörigen, verzögerten Signalen VFBS1 und VFS1.

In einer Einheit 222 zum Kombinieren der Signale werden schließlich das verzögerte Fernsehbildsignal VFBS1 und das transformierte Fernsehbildsignal TFBS2 unter Verwendung des zugehörigen verzögerten Fehlersignals VFS1 und des transformierten Fehlersignals TFS2 kombiniert. Gestörte Bildbereiche in VFBS1 werden auf Block-, Zeilen- oder Bildbasis durch Kopieren der entsprechenden, ungestörten Bildbereiche des transformierten Fernsehbildsignals TFBS2 ersetzt, das deshalb auch als Stützsignal angesehen wird. Das Ausgangssignal der Einheit 222 stellt eine in der Bildqualität optimierte und eventuell verzögerte Version FBS1+ des ursprünglichen, gestörten Fernsehbildsignals FBS1 dar. Das verbesserte Fernsehbildsignal FBS1+ wird an eine nachgeschaltete Einheit zur Fehlerverschleierung auf Basis von zeitlicher, örtlicher oder zeitlich-örtlicher Verknüpfung von Bildern einer einzelnen Bildsequenz weitergeleitet. Solche Einheiten zur Fehlerverschleierung sind beispielsweise aus MPEG-Decodern bekannt.

Das in der Fig. 3 beschriebene System kann zum einen in einer Fernsehempfangseinheit zum Einsatz kommen wie sie in Fig. 2 dargestellt ist. Es ist zum anderen auch eine unabhängige Verarbeitungseinheit denkbar, die mehreren DVB-T-Fernsehempfängern nachgeschaltet ist. Auch ein Zusammenführen von Signalen unterschiedlicher Fernsehempfänger (DVB-T, DVB-H, T-DMB) ist möglich.

Durch das erfindungsgemäße Verfahren kann auch bei ungünstigen Empfangsbedingungen durch Verarbeitung zweier inhaltsähnlicher, digital übertragener Fernsehbildsignale eine Verbesserung der Bildqualität eines TV-Programms durch Kombination der Bilder der Bildsequenzen erreicht werden. Weitere zentrale Bestandteile des erfindungsgemäßen Verfahrens sind dabei eine Transformation zum Angleich der örtlichen Bildauflösungen und ein Ausgleich der Verzögerung zwischen den einzelnen Fernsehbildsignalen vor der eigentlichen Bildkombination. Zur Transformation und Synchronisation werden die nötigen Parameter gegebenenfalls im Rahmen der Erfindung vorab geschätzt.

## Patentansprüche

1. Verfahren zum Gewinnen von Bildern mit den Schritten:
a) Empfangen einer ersten mehrere Bilder umfassenden codierten Bildsequenz,
b) Empfangen einer zweiten mehrere Bilder umfassenden codierten Bildsequenz, deren Bilder den Bildern der ersten Bildsequenz entsprechen, wobei die erste und die zweite Bildsequenz über unterschiedliche Empfangszweige und gemäß unterschiedlichen Übertragungsstandards empfangen werden;
c) Decodieren eines ersten Bildes (10, 18) aus der ersten codierten Bildsequenz und Ermitteln von Werten für Regionen (12, 14, 16) des ersten Bildes (10, 18), wobei die Werte die Empfangsqualität des empfangenen Codes quantitativ angeben,
d) Zuordnen eines dem ersten Bild (10, 18) entsprechenden Stützbildes (20, 24) aus der zweiten codierten Bildsequenz,
e) Decodieren des Stützbildes (20, 24) und Ermitteln von Werten für Regionen (14', 16', 22) des Stützbildes (20, 24), wobei die Werte die Empfangsqualität des empfangenen Codes quantitativ angeben,
f) Zuordnen zumindest einer Region (14', 16') des Stützbildes (20, 24) zu wenigstens einer Region (14, 16) des ersten Bildes (10, 18),
g) Ändern zumindest einer Region (14, 16) des ersten Bildes (10, 18) unter Verwendung einer zugeordneten Region (14', 16') des Stützbildes (20, 24) bei einer einem vorbestimmten Kriterium genügenden Kombination aus einem Wert für die Region (14, 16) des ersten Bildes (10, 18) und einem Wert für die zugeordnete Region (14', 16') des Stützbildes (20, 24),
**dadurch gekennzeichnet, dass**
der Schritt des Zuordnens eines dem ersten Bild entsprechenden Stützbildes umfasst:
d1) Decodieren einer Mehrzahl von Bildern aus der zweiten codierten Bildsequenz und Ermitteln von Werten für Regionen jedes Bildes, wobei die Werte die Empfangsqualität des empfangenen Codes quantitativ angeben,
d2) Berechnen je eines Ähnlichkeitswerts für die Ähnlichkeit zwischen dem ersten Bild und jedem Bild aus der Mehrzahl von Bildern in Abhängigkeit von den Werten für die Regionen des jeweiligen Bildes, und hierbei
d2.1) Berechnen eines abgewandelten Bildes aus einem Bild der Mehrzahl der Bilder mittels einer durch Abbildungsparameter definierten Skalierung und/oder Verschiebung,
d2.2) Berechnen eines Ähnlichkeitswerts für die Ähnlichkeit zwischen dem ersten Bild und dem abgewandelten Bild in Abhängigkeit von den Werten für die Regionen des jeweiligen Bildes, wobei Differenzen von Intensitätswerten von Bildpunkten des ersten Bildes und Intensitätswerten entsprechender Bildpunkte des abgewandelten Bildes gebildet werden und der Ähnlichkeitswert als Summe der Quadrate dieser Differenzen für das gesamte Bild berechnet wird, wobei aber eine solche Region, für die ein die Qualität des empfangenen Codes angebender Wert anzeigt, dass diese Region gestört ist, nicht beim Berechnen des Ähnlichkeitswerts berücksichtigt wird;
d2.3) Ändern der Abbildungsparameter in Abhängigkeit von dem Ähnlichkeitswert,
d2.4) Wiederholen der Schritte d2.1, d2.2 und d2.3, solange bis der Ähnlichkeitswert oder das Ausmaß der durch Schritt d2.3 bewirkten Änderung der Abbildungsparameter einem vorbestimmten Kriterium genügt,
d3) Ermitteln eines Bildversatzes (B) zwischen der ersten und der zweiten Bildsequenz auf Grundlage der berechneten Ähnlichkeitswerte,
d4) Auswählen (VZ) eines dem ersten Bild (10, 18) entsprechenden Stützbildes (20, 24) aus der zweiten codierten Bildsequenz anhand des ermittelten Bildversatzes (B).

2. Verfahren nach Anspruch 1,
bei dem der Schritt des Zuordnens einer Region umfasst:
f1) Berechnen einer abgewandelten Region (14', 16') des Stützbildes (24) mittels einer durch Abbildungsparameter definierten Skalierung und/oder Verschiebung (T),
f2) Zuordnen zumindest einer abgewandelten Region (14', 16') des Stützbildes (24) zu wenigstens einer Region (14, 16) des ersten Bildes (18).

3. Verfahren zum Gewinnen von Bildern mit den Schritten:
a) Empfangen einer ersten mehrere Bilder umfassenden codierten Bildsequenz,
b) Empfangen einer zweiten mehrere Bilder umfassenden codierten Bildsequenz, deren Bilder den Bildern der ersten Bildsequenz entsprechen, wobei die erste und die zweite Bildsequenz über unterschiedliche Empfangszweige und gemäß unterschiedlichen Übertragungsstandards empfangen werden;
c) Decodieren eines ersten Bildes (10, 18) aus der ersten codierten Bildsequenz und Ermitteln von Werten für Regionen (12, 14, 16) des ersten Bildes (10, 18), wobei die Werte die Empfangsqualität des empfangenen Codes quantitativ angeben,
d) Zuordnen eines dem ersten Bild (10, 18) entsprechenden Stützbildes (20, 24) aus der zweiten codierten Bildsequenz,
e) Decodieren des Stützbildes (20, 24) und Ermitteln von Werten für Regionen (14', 16', 22) des Stützbildes (20, 24), wobei die Werte die Empfangsqualität des empfangenen Codes quantitativ angeben,
f) Zuordnen zumindest einer Region (14', 16') des Stützbildes (20, 24) zu wenigstens einer Region (14, 16) des ersten Bildes (10, 18),
g) Ändern zumindest einer Region (14, 16) des ersten Bildes (10, 18) unter Verwendung einer zugeordneten Region (14', 16') des Stützbildes (20, 24) bei einer einem vorbestimmten Kriterium genügenden Kombination aus einem Wert für die Region (14, 16) des ersten Bildes (10, 18) und einem Wert für die zugeordnete Region (14', 16') des Stützbildes (20, 24),
**dadurch gekennzeichnet, dass**
der Schritt des Zuordnens einer Region umfasst:
f1) Berechnen eines abgewandelten Bildes (24) aus dem Stützbild (20) mittels einer durch Abbildungsparameter definierten Skalierung und/oder Verschiebung (T),
f2) Berechnen eines Ähnlichkeitswerts für die Ähnlichkeit zwischen dem ersten Bild (18) und dem abgewandelten Bild (24) in Abhängigkeit von den Werten für die Regionen (12, 14, 16, 14', 16', 22) des jeweiligen Bildes, wobei Differenzen von Intensitätswerten von Bildpunkten des ersten Bildes und Intensitätswerten entsprechender Bildpunkte des abgewandelten Bildes gebildet werden und der Ähnlichkeitswert als Summe der Quadrate dieser Differenzen für das gesamte Bild berechnet wird, wobei aber eine solche Region, für die ein die Qualität des empfangenen Codes angebender Wert anzeigt, dass diese Region gestört ist, nicht beim Berechnen des Ähnlichkeitswerts berücksichtigt wird;
f3) Ändern der Abbildungsparameter in Abhängigkeit von dem Ähnlichkeitswert,
f4) Wiederholen der Schritte f1, f2 und f3, solange bis der Ähnlichkeitswert oder das Ausmaß der durch Schritt f3 bewirkten Änderung der Abbildungsparameter einem vorbestimmten Kriterium genügt,
f5) Zuordnen einer Region (14', 16') des Stützbildes (20, 24) zu einer Region (14, 16) des ersten Bildes (10, 18) auf Grundlage der Abbildungsparameter.

4. Verfahren nach Anspruch 3,
bei dem der Schritt des Zuordnens eines dem ersten Bild entsprechenden Stützbildes umfasst:
d1) Auswählen (VZ) eines dem ersten Bild (10, 18) entsprechenden Stützbildes (20, 24) aus der zweiten codierten Bildsequenz in Abhängigkeit eines zwischen der ersten und der zweiten Bildsequenz vorhandenen Bildversatzes (B).

5. Verfahren nach Anspruch 3,
bei dem der Schritt des Zuordnens eines dem ersten Bild entsprechenden Stützbildes umfasst:
d1) Decodieren einer Mehrzahl von Bildern aus der zweiten codierten Bildsequenz und Ermitteln von Werten für Regionen jedes Bildes, wobei die Werte die Empfangsqualität des empfangenen Codes quantitativ angeben,
d2) Berechnen je eines Ähnlichkeitswerts für die Ähnlichkeit zwischen dem ersten Bild und jedem Bild aus der Mehrzahl von Bildern in Abhängigkeit von den Werten für die Regionen des jeweiligen Bildes,
d3) Ermitteln eines Bildversatzes zwischen der ersten und der zweiten Bildsequenz auf Grundlage der berechneten Ähnlichkeitswerte,
d4) Auswählen (VZ) eines dem ersten Bild (10, 18) entsprechenden Stützbildes (20, 24) aus der zweiten codierten Bildsequenz anhand des ermittelten Bildversatzes (B).

6. Verfahren nach einem der vorhergehenden Ansprüche,
**dadurch gekennzeichnet, dass**
die Bilder (10) der ersten codierten Bildsequenz im Vergleich zu den Bildern (20) der zweiten codierten Bildsequenz ein unterschiedliches Verhältnis von in Bildpunkten bemessenen Bildkantenlängen der Bilder und/oder eine unterschiedliche Bildauflösung aufweisen.

7. Verfahren nach einem der vorhergehenden Ansprüche,
**dadurch gekennzeichnet, dass**
das Stützbild (20, 24) aus der zweiten codierten Bildsequenz einen Ausschnitt aus dem entsprechenden Bild (10, 18) aus der ersten codierten Bildsequenz darstellt.

8. Verfahren nach einem der vorhergehenden Ansprüche,
**dadurch gekennzeichnet, dass**
die Bilder der ersten codierten Bildsequenz im Vergleich zu den Bildern der zweiten codierten Bildsequenz unterschiedlich codiert sind.

9. Verfahren nach einem der vorhergehenden Ansprüche,
**dadurch gekennzeichnet, dass**
die erste codierte Bildsequenz und/oder die zweite codierte Bildsequenz einem dem Standard "Digital Video Broadcasting - Terrestrial" oder dem Standard "Digital Video Broadcasting - Handheld" oder dem Standard "Terrestrial - Digital Multimedia Broadcasting" entsprechenden Datenstrom entnommen ist.

10. Fernsehempfangseinheit für ein Kraftfahrzeug mit wenigstens zwei Empfängern, die zum Empfangen von codierten Bildsequenzen ausgelegt sind, und einer Anzeigeeinrichtung,
**dadurch gekennzeichnet, dass**
die Fernsehempfangseinheit dazu ausgelegt ist, Bildsequenzen aus den wenigstens zwei Empfängern mit einem der Verfahren nach Anspruch 1 bis 9 zu verarbeiten und ein Anzeigen von Bilder mit gemäß Schritt g) des Verfahrens geänderten Regionen auf der Anzeigeeinrichtung zu bewirken.

## Claims

1. Process for acquiring images comprising the steps:
a) Receiving a first coded image sequence comprising a plurality of images,
b) Receiving a second coded image sequence comprising a plurality of images, the images of which correspond to the images of the first image sequence, the first and second image sequences being received via different receive paths and in accordance with different broadcasting standards;
c) Decoding a first image (10, 18) from the first coded image sequence and determining values for regions (12, 14, 16) of the first image (10, 18), the values quantitatively specifying the reception quality of the received code,
d) Allocating a key frame (20, 24) corresponding to the first image (10, 18) from the second coded image sequence,
e) Decoding the key frame (20, 24) and determining values for regions (14', 16', 22) of the key frame (20, 24), the values quantitatively specifying the reception quality of the received code,
f) Allocating at least one region (14', 16') of the key frame (20, 24) to at least one region (14, 16) of the first image (10, 18),
g) Modifying at least one region (14, 16) of the first image (10, 18) using an associated region (14', 16') of the key frame (20, 24) with a combination of one value for the region (14, 16) of the first image (10, 18) and one value for the associated region (14',16') of the key frame (20, 24), said combination fulfilling a predetermined criterion,
**characterised in that**
the step of allocating a key frame corresponding to the first image comprises:
d1) Decoding a plurality of images from the second coded image sequence and determining values for regions of each image, the values quantitatively specifying the reception quality of the received code,
d2) Calculating in each case a similarity value for the similarity between the first image and each image from the plurality of images as a function of the values for the regions of the respective images, and in so doing
d2.1) Calculating a modified image from one image from the plurality of images by means of scaling and/or displacement defined by imaging parameters,
d2.2) Calculating a similarity value for the similarity between the first image and the modified image as a function of the values for the regions of the respective image, differences being formed between the intensity values of pixels of the first image and the intensity values of corresponding pixels of the modified image and the similarity value being calculated as a sum of the squares of these differences for the whole image, however, a region that the value given for the quality of the received code identifies as being disrupted not being taken into account in calculating the similarity value;
d2.3) Modifying the imaging parameters as a function of the similarity value,
d2.4) Repeating steps d2.1, d2.2 and d2.3 until the similarity value or the extent of the modification of the imaging parameters effected by step d2.3 fulfils a predetermined criterion,
d3) Determining an image offset (B) between the first and the second image sequence on the basis of the calculated similarity values,
d4) Selecting (VZ) a key frame (20, 24) corresponding to the first image (10, 18) from the second coded image sequence using the determined image offset (B).

2. Process according to Claim 1,
wherein the step of allocating a region comprises:
f1) Calculating a modified region (14', 16') of the key frame (24) by means of scaling and/or displacement (T) defined by imaging parameters,
f2) Allocating at least one modified region (14', 16') of the key frame (24) to at least one region (14, 16) of the first image (18).

3. Process for acquiring images comprising the steps:
a) Receiving a first coded image sequence comprising a plurality of images,
b) Receiving a second coded image sequence comprising a plurality of images, the images of which correspond to the images of the first image sequence, the first and second image sequences being received via different receive paths and in accordance with different broadcasting standards;
c) Decoding a first image (10, 18) from the first coded image sequence and determining values for regions (12, 14, 16) of the first image (10, 18), the values quantitatively specifying the reception quality of the received code,
d) Allocating a key frame (20, 24) corresponding to the first image (10, 18) from the second coded image sequence,
e) Decoding the key frame (20, 24) and determining values for regions (14', 16', 22) of the key frame (20, 24), the values quantitatively specifying the reception quality of the received code,
f) Allocating at least one region (14', 16') of the key frame (20, 24) to at least one region (14, 16) of the first image (10, 18),
g) Modifying at least one region (14, 16) of the first image (10, 18) using an associated region (14', 16') of the key frame (20, 24) with a combination of one value for the region (14, 16) of the first image (10, 18) and one value for the associated region (14', 16') of the key frame (20, 24), said combination fulfilling a predetermined criterion,
**characterised in that**
the step of allocating a region comprises:
f1) Calculating a modified image (24) from the key frame (20) by means of scaling and/or displacement (T) defined by imaging parameters,
f2) Calculating a similarity value for the similarity between the first image (18) and the modified image (24) as a function of the values for the regions (12, 14, 16, 14', 16', 22) of the respective images, differences being formed between the intensity values of pixels of the first image and the intensity values of corresponding pixels of the modified image and the similarity value being calculated as a sum of the squares of these differences for the whole image, however, a region that the value given for the quality of the received code identifies as being disrupted not being taken into account in calculating the similarity value;
f3) Modifying the imaging parameters as a function of the similarity value,
f4) Repeating steps f1, f2 and f3 until the similarity value or the extent of the modification of the imaging parameters effected by step f3 fulfils a predetermined criterion,
f5) Allocating a region (14', 16') of the key image (20, 24) to a region (14, 16) of the first image (10, 18) on the basis of the imaging parameters.

4. Process according to Claim 3,
wherein the step of allocating a key frame corresponding to the first image comprises:
d1) Selecting (VZ) a key frame (20, 24) corresponding to the first image (10, 18) from the second coded image sequence as a function of an image offset (B) existing between the first and second image sequence.

5. Process according to Claim 3,
wherein the step of allocating a key frame corresponding to the first image comprises:
d1) Decoding a plurality of images from the second coded image sequence and determining values for regions of each image, the values quantitatively specifying the reception quality of the received code,
d2) Calculating in each case a similarity value for the similarity between the first image and each image from the plurality of images as a function of the values for the regions of the respective images,
d3) Determining an image offset between the first and second image sequence on the basis of the calculated similarity values,
d4) Selecting (VZ) a key frame (20, 24) corresponding to the first image (10, 18) from the second coded image sequence using the determined image offset (B).

6. Process according to one of the preceding claims,
**characterised in that**
compared to the images (20) of the second coded image sequence, the images (10) of the first coded image sequence have a different ratio of image edge-lengths measured in pixels and/or have a different resolution.

7. Process according to one of the preceding claims,
**characterised in that**
the key frame (20, 24) from the second coded image sequence represents a detail from the corresponding image (10, 18) from the first coded image sequence.

8. Process according to one of the preceding claims,
**characterised in that**
the images of the first coded image sequence are coded differently compared to the images of the second coded image sequence.

9. Process according to one of the preceding claims,
**characterised in that**
the first coded image sequence and/or the second coded image sequence is taken from a data stream corresponding to the "Digital Video Broadcasting - Terrestrial" standard or the "Digital Video Broadcasting - Handheld" standard or the "Terrestrial - Digital Multimedia Broadcasting" standard.

10. Television reception unit for a motor vehicle comprising at least two receivers, designed for receiving coded image sequences, and a display unit,
**characterised in that**
the television reception unit is designed to process image sequences from the at least two receivers using the process according to Claims 1 to 9 and to display images comprising regions modified in accordance with step g) of the process on the display unit.

## Revendications

1. Procédé d'acquisition d'images comprenant les étapes consistant à :
a) recevoir une première séquence d'images codées comprenant plusieurs images,
b) recevoir une deuxième séquence d'images codées comprenant plusieurs images, dont les images correspondent aux images de la première séquence d'images, dans lequel la première et la seconde séquence d'images sont reçues via différentes branches de réception et selon différents standards de transmission,
c) décoder une première image (10, 18) de la première séquence d'images codées et déterminer des valeurs pour des régions (12, 14, 16) de la première image (10, 18), dans lequel les valeurs indiquent quantitativement la qualité de réception du code reçu,
d) attribuer une image d'appui (20, 24) correspondant à la première image (10, 18) en partant de la seconde séquence d'images codées,
d) décoder l'image d'appui (20, 24) et déterminer des valeurs pour des régions (14', 16', 22) de l'image d'appui (20, 24), dans lequel les valeurs indiquent quantitativement la qualité de réception du code reçu,
f) attribuer au moins une région (14', 16') de l'image d'appui (20, 24) à au moins une région (14, 16) de la première image (10, 18),
g) modifier au moins une région (14, 16) de la première image (10, 18) en utilisant une région correspondante (14', 16') de l'image d'appui (20, 24) dans une combinaison répondant à un critère prédéterminé en partant d'une valeur pour la région (14, 16) de la première image (10, 18) et d'une valeur pour la région correspondante (14', 16') de l'image d'appui (20, 24),
**caractérisé en ce que** :
l'étape d'attribution d'une image d'appui
correspondant à la première image comprend :
d1) le décodage d'une pluralité d'images de la seconde
séquence d'images codées et la détermination de valeurs pour des régions de chaque image, dans lequel les valeurs indiquent quantitativement la qualité de réception du code reçu,
d2) le calcul respectif d'une valeur de similitude
pour la similitude entre la première image et chaque image de la pluralité d'images en fonction des valeurs pour les régions de l'image respective, et, en l'occurrence,
d2.1) le calcul d'une image modifiée venant d'une
image de la pluralité d'images au moyen d'un cadrage et/ou d'un décalage définis par des paramètres de représentation,
d2.2) le calcul d'une valeur de similitude pour la
similitude entre la première image et l'image modifiée en fonction des valeurs pour les régions de l'image respective, dans lequel des différences sont formées par des valeurs d'intensité de points d'image de la première image et des valeurs d'intensité de points d'image correspondants de l'image modifiée et la valeur de similitude est calculée sous la forme d'une somme des carrés de ces différences pour la totalité de l'image, mais dans lequel cette région, pour laquelle une valeur indiquant la qualité du code reçu montre que cette région est perturbée, n'est pas prise en compte dans le calcul de la valeur de similitude,
d2.3) la modification des paramètres de représentation
en fonction de la valeur de similitude,
d2.4) la répétition des étapes d2.1, d2.2 et d2.3
assez longtemps pour que la valeur de similitude ou le degré de la modification des paramètres de représentation effectuée par l'étape d2.3 réponde à un critère prédéterminé,
d3) la détermination d'un décalage d'image (B) entre
la première et la seconde séquence d'images sur la base des valeurs de similitude calculées,
d4) la sélection (VZ) d'une image d'appui (20, 24)
correspondant à la première image (10, 18) en partant de la seconde séquence d'images codées sur la base du décalage d'image déterminé (B).

2. Procédé selon la revendication 1,
dans lequel l'étape de l'attribution d'une région
comprend :
f1) le calcul d'une région modifiée (14', 16') de
l'image d'appui (24) au moyen d'un cadrage et/ou d'un décalage (T) définis par des paramètres de représentation, et
f2) l'attribution d'au moins une région modifiée (14', 16') de l'image d'appui (24) à au moins une région (14, 16) de la première image (18).

3. Procédé d'acquisition d'images comprenant les étapes consistant à :
a) recevoir une première séquence d'images codées comprenant plusieurs images,
b) recevoir une seconde séquence d'images codées comprenant plusieurs images, dont les images correspondent aux images de la première séquence d'images, dans lequel la première et la seconde séquence d'images sont reçues via des branches de réception différentes et selon des standards de transmission différents,
c) décoder une première image (10, 18) de la première séquence d'images codées et déterminer des valeurs pour des régions (12, 14, 16) de la première image (10, 18), dans lequel les valeurs indiquent quantitativement la qualité de réception du code reçu,
d) attribuer une image d'appui (20, 24) correspondant à la première image (10, 18) en partant de la seconde séquence d'images codées,
e) décoder l'image d'appui (20, 24) et déterminer des valeurs pour des régions (14', 16', 22) de l'image d'appui (20, 24), dans lequel les valeurs indiquent quantitativement la qualité de réception du code reçu,
f) attribuer au moins une région (14', 16') de l'image d'appui (20, 24) à au moins une région (14, 16) de la première image (10, 18),
g) modifier au moins une région (14, 16) de la première image (10, 18) en utilisant une région correspondante (14', 16') de l'image d'appui (20, 24) dans une combinaison répondant à un critère prédéterminé à partir d'une valeur pour la région (14, 16) de la première image (10, 18) et d'une valeur pour la région correspondante (14', 16') de l'image d'appui (20, 24),
**caractérisé en ce que** :
l'étape d'attribution d'une région comprend :
f1) le calcul d'une image modifiée (24) à partir de
l'image d'appui (20) au moyen d'un cadrage et/ou d'un décalage (T) définis par des paramètres de représentation,
f2) le calcul d'une valeur de similitude pour la
similitude entre la première image (18) et l'image modifiée (24) en fonction des valeurs pour les régions (12, 14, 16, 14', 16', 22) de l'image respective, dans lequel des différences sont formées par des valeurs d'intensité de points d'image de la première image et des valeurs d'intensité de points d'image correspondants de l'image modifiée et la valeur de similitude est calculée sous la forme d'une somme des carrés de ces différences pour la totalité de l'image, mais dans lequel cette région, pour laquelle une valeur indiquant la qualité du code reçu indique que cette région est perturbée, n'est pas prise en compte dans le calcul de la valeur de similitude, f3) la modification des paramètres de représentation
en fonction de la valeur de similitude,
f4) la répétition des étapes f1, f2 et f3 aussi
longtemps que la valeur de similitude ou le degré de la modification effectuée par l'étape f3 des paramètres de représentation réponde à un critère prédéterminé, et
f5) l'attribution d'une région (14', 16') de l'image
d'appui (20, 24) à une région (14, 16) de la première image (10, 18) sur la base des paramètres de représentation.

4. Procédé selon la revendication 3,
dans lequel l'étape d'attribution d'une image d'appui
correspondant à la première image comprend :
d1) la sélection (VZ) d'une image d'appui (20, 24)
correspondant à la première image (10, 18) en partant de la seconde séquence d'images codées en fonction d'un décalage d'image (B) présent entre la première et la seconde séquence d'images.

5. Procédé selon la revendication 3,
dans lequel l'étape d'attribution d'une image d'appui
correspondant à la première image comprend :
d1) le décodage d'une pluralité d'images de la seconde
séquence d'images codées et la détermination de valeurs pour des régions de chaque image, dans lequel les valeurs indiquent quantitativement la qualité de réception du code reçu,
d2) le calcul respectif d'une valeur de similitude
pour la similitude entre la première image et chaque image issue de la pluralité d'images en fonction des valeurs pour les régions de l'image respective,
d3) la détermination d'un décalage d'image entre la
première et la seconde séquence d'images sur la base des valeurs de similitude calculées, et
d4) la sélection (VZ) d'une image d'appui (20, 24)
correspondant à la première image (10, 18) en partant de la seconde séquence d'images codées sur la base du décalage d'image déterminé (B).

6. Procédé selon l'une quelconque des revendications
précédentes,
**caractérisé en ce que** :
les images (10) de la première séquence d'images codées présentent en comparaison des images (20) de la seconde séquence d'images codées un rapport différent des longueurs d'arête des images mesurées aux points d'image et/ou une résolution d'image différente.

7. Procédé selon l'une quelconque des revendications
précédentes,
**caractérisé en ce que** :
l'image d'appui (20, 24) issue de la seconde séquence d'images codées représente une section de l'image correspondante (10, 18) provenant de la première séquence d'images codées.

8. Procédé selon l'une quelconque des revendications
précédentes,
**caractérisé en ce que** :
les images de la première séquence d'images codées sont codées différemment en comparaison des images de la seconde séquence d'images codées.

9. Procédé selon l'une quelconque des revendications
précédentes,
**caractérisé en ce que** :
la première séquence d'images codées et/ou la seconde séquence d'images codées est ou sont tirées d'un flux de données correspondant au standard « Digital Video Broadcasting - Terrestrial » ou au standard « Digital Video Broadcasting - Handheld » ou au standard (Terrestrial - Digital Multimedia Broadcasting ».

10. Unité de réception à distance pour un véhicule automobile ayant au moins deux récepteurs, qui sont dimensionnés pour recevoir des séquences d'images codées, et un dispositif d'affichage, **caractérisée en ce que** :
l'unité de réception à distance est dimensionnée de manière à traiter des séquences d'images provenant des au moins deux récepteurs avec l'un des procédés selon les revendications 1 à 9 et à présenter un affichage d'images avec des régions modifiées selon l'étape g) du procédé sur le dispositif d'affichage.
